# EUROPÄISCHE PATENTSCHRIFT

(11) **EP 3 192 680 B1**
(45) Veröffentlichungstag und Bekanntmachung des Hinweises auf die Patenterteilung: **19.03.2025**
(21) Anmeldenummer: 16205830.9
(22) Anmeldetag: 21.12.2016
(51) Int. Cl.: B60G 7/00

(54) **ACHSANORDNUNG FÜR EIN KRAFTFAHRZEUG**
AXLE ARRANGEMENT FOR A VEHICLE
ENSEMBLE D'ESSIEU POUR UN VÉHICULE

(30) Priorität: 15.01.2016 DE 102016100666
(43) Veröffentlichungstag der Anmeldung: 19.07.2017
(73) Patentinhaber: Benteler Automobiltechnik GmbH, 33102 Paderborn (DE)
(72) Erfinder: Mielke, Oliver, 33184 Altenbeken (DE); Peitz, Detlev, 33106 Paderborn (DE); Mehner, Hauke, 33104 Paderborn (DE); Ebbing, Tobias, 33104 Paderborn (DE)
(74) Vertreter: Griepenstroh, Jörg

(56) Entgegenhaltungen:
- EP-A1- 1 642 754
- CN-A- 104 309 427
- CN-A- 105 235 462
- CN-U- 203 460 637
- CN-U- 204 172 635
- CN-U- 204 567 182
- CN-U- 205 498 528
- DE-A1- 102004 003 151
- DE-A1- 102006 014 730
- DE-A1- 102006 032 595
- DE-A1- 102008 013 182
- DE-A1- 102008 047 015
- DE-A1- 102009 042 403
- DE-A1- 102010 051 741
- DE-A1- 102011 053 927
- JP-A- 2002 316 228
- JP-A- H11 241 745
- KR-A- 20100 001 309
- US-A1- 2015 115 561

## Beschreibung

Die vorliegende Erfindung betrifft eine Achsanordnung für einen Federlenker für ein Kraftfahrzeug gemäß den Merkmalen im Oberbegriff von Patentanspruch 1.

Aus dem Stand der Technik sind einzelne Radaufhängungen von Kraftfahrzeugen bekannt. Hierzu gibt es Mehrlenkerachsen, bei denen Lenker an einem Ende drehbar bzw. schwenkbar an einer Kraftfahrzeugkarosserie gekoppelt sind und mit dem gegenüberliegenden Ende des Lenkers drehbar bzw. schwenkbar an einem Radträger gekoppelt sind.

Ein zumeist unterer Lenker einer Kraftfahrzeugachse weist zudem eine Aufnahme für eine Feder auf und optional weiterhin eine Aufnahme für einen Dämpfer und/oder Kraftfahrzeugstabilisator. Somit werden die beim Ein- oder Ausfedern des Kraftfahrzeugrades entstehenden Kräfte über die Feder aufgenommen.

Ein entsprechender Federlenker ist dabei jedoch zumeist ein längliches schmales Bauteil. Eine Feder ist hingegen als Schraubendruckfeder ausgebildet und weist einen größeren Durchmesser auf als die Breite des Federlenkers selber. Federlenker sind daher zumeist im Bereich der Federaufnahme verbreitert ausgebildet. Dies führt jedoch beim Ein- oder Ausfedern dazu, dass in den Federlenker derart Kräfte eingeleitet werden, dass sich der Federlenker minimal aufweitet oder kontrahiert. Dieser Effekt wird auch als Atmen bezeichnet.

Der Federlenker selbst steht dabei im Zielkonflikt, besonders biegesteif ausgebildet zu sein, jedoch gleichzeitig ein geringes Bauteilgewicht aufzuweisen, so dass gerade auf Seiten der ungefederten Radmassen ein geringes Gewicht vorhanden ist, so dass eine hohe Fahrdynamik des Kraftfahrzeuges ermöglicht wird.

Aus der DE 10 2012 100 719 A1 oder auch aus der DE 10 2013 222 234 A1 sind Federlenker bekannt, die als umgeformte Stahlblechbauteile hergestellt sind. Diese sind jedoch auch in ihrem Querschnitt im Bereich der Federaufnahme verbreitert ausgebildet.

Aus der US 2015/115561 A1 ist ein Federlenker entsprechend des Oberbegriffs des Anspruchs 1 bekannt, bei dem auf ein offenes aufgeweitetes Hohlprofil ein Federsitzblech angeordnet wird.

Ferner ist aus der DE 10 2011 053 927 A1 ein Federlenker bekannt, der als stranggepresstes Bauteil hergestellt ist.

Die CN 204 172 635 U offenbart ebenfalls einen Federlenker, der Teil einer Fahrzeugaufhängung ist.

Aufgabe der vorliegenden Erfindung ist es daher, ausgehend vom Stand der Technik einen Federlenker aufzuzeigen, der als Stahlbauteil hergestellt ist und ein geringes Eigengewicht und eine gleichzeitig hohe Steifigkeit aufweist.

Die zuvor genannte Aufgabe wird mit einer Anordnung für einen Federlenker gemäß den Merkmalen im Patentanspruch 1 gelöst.

Der Federlenker für ein Kraftfahrzeug ist als längliches umgeformtes, im Querschnitt offenes Hohlprofil, aus einem Stahlwerkstoff hergestellt und weist an seinen Enden jeweils Anbindungspunkte auf. Insbesondere ist der Federlenker als Blechumformbauteil aus einer Stahlblechplatine hergestellt. Er zeichnet sich dadurch aus, dass der Federlenker in Einbaulage mit seiner Öffnung des Hohlprofils nach oben zeigend angeordnet ist, wobei auf oder in der Öffnung ein Federsitzblech zur Aufnahme einer Schraubendruckfeder mit dem Federlenker gekoppelt ist. Die Erfindung betrifft somit eine Achsanordnung, in welcher der erfindungsgemäße Federlenker eingegliedert ist.

Erfindungsgemäß ist der Federlenker selbst somit als offenes bzw. teiloffenes Hohlprofil ausgebildet. Insbesondere weist dies im Querschnitt einen U-förmigen, C-förmigen bzw. hutförmigen Verlauf auf. Die Öffnung des Hohlprofils zeigt in Einbaulage des Federlenkers auf die Vertikalrichtung bezogen nach oben.

Erfindungsgemäß ist nunmehr ein Federsitzblech auf der Öffnung bzw. teilweise in der Öffnung angeordnet und mit dem Federlenker gekoppelt. Diese Koppelung kann beispielsweise durch ein thermisches Fügeverfahren, beispielsweise Schweißen erfolgen. Der Federlenker selbst kann auch als zumindest partiell, insbesondere vollständig vergütetes Bauteil hergestellt sein. Der Federlenker kann auch mittels Warmumformen und Presshärten hergestellt sein.

Die Feder ist insbesondere als Schraubendruckfeder ausgebildet, wobei ein Teil der Schraubendruckfeder mit seiner Windung, insbesondere mit seiner abschließenden Windung auf einer Federauflagenfläche des Federsitzbleches aufliegt. Die abschließende Windung der Schraubendruckfeder, mithin die gesamte Schraubendruckfeder ist somit oberhalb des Federlenkers angeordnet. Aufgrund der oberseitigen Anordnung ist es nicht notwendig, dass der Federlenker aufgeweitet ist. Das Querschnittsprofil zeichnet sich somit dadurch aus, dass es über den Verlauf mithin in Längsrichtung annähernd gleich ist bzw. sich verjüngt oder verringert. Nicht hingegen jedoch ist der Querschnitt aufgeweitet. Der Effekt des Atmens wird somit insbesondere vermieden, so dass der Kraftfluss innerhalb des Federlenkers verbessert ist.

Insbesondere ist der Federlenker im Querschnitt derart aufgebaut, dass er einen Steg und von dem Steg abstehende Schenkel aufweist. Der Steg erstreckt sich in Einbaulage insbesondere in Horizontalrichtung orientiert und die Schenkel in Vertikalrichtung orientiert. Der Abstand der Schenkel zueinander ist erfindungsgemäß im Bereich des Federsitzbleches gleich oder kleiner gegenüber dem 1,2-fachen des Abstandes der Schenkel zueinander im Bereich eines Endes oder eines Anbindungspunktes. In bevorzugter Ausführungsvariante ist der Abstand der Schenkel zueinander im Bereich des Federsitzbleches kleiner gleich dem Abstand der Schenkel im Bereich des Endes oder des Anbindungspunktes. Somit ist der Federlenker im Bereich des Federsitzes insbesondere nicht aufgeweitet. Auch kann der Abstand der Schenkel zueinander relativ bezogen sein auf den Durchmesser der Schraubendruckfeder oder einen Aufnahmedurchmesser. Im Falle des Aufnahmedurchmessers ist dieser entsprechend ein Durchmesser zur Aufnahme der Schaubendruckfeder auf dem Federsitzblech. Insbesondere wird die letzte Windung der Schraubendruckfeder durch den Aufnahmedurchmesser auf dem Federsitzblech aufgenommen.

In diesen Fällen entspricht insbesondere der Abstand der Schenkel zueinander im Bereich des Federsitzbleches, insbesondere der größte auftretende Abstand der Schenkel zueinander im Bereich des Federsitzbleches dem 0,5-fachen bis 1,2-fachen, insbesondere dem 0,8-fachen bis 1,1-fachen des Durchmessers der Schraubendruckfeder oder des Aufnahmedurchmessers.

Die Schenkel selbst müssen dabei nicht vollständig in Vertikalrichtung verlaufen, sondern können auch schräg in einem spitzen Winkel zur Vertikalrichtung verlaufend angeordnet sein. Insbesondere vergrößert sich der Abstand der Schenkel in Richtung zu der Öffnung des Hohlprofils hin. Somit sind die Schenkel insbesondere V-förmig zueinander verlaufend angeordnet.

Weiterhin weist besonders bevorzugt das Hohlprofil im Bereich des Federsitzbleches seitlich abstehende Flansche auf. Hierdurch vergrößert sich die Auflagenfläche und/oder Koppelungsfläche von Hohlprofil und Federsitzblech.

Weiterhin bevorzugt sind insbesondere an den Schenkeln oder Flanschen Kragen ausgebildet. Die Kragen sind bevorzugt auf die Vertikalrichtung bezogen nach unten abgebogen. Hierdurch wird nochmals die Steifigkeit, insbesondere der Widerstand gegen Durchbiegung in Vertikalrichtung des erfindungsgemäßen Federlenkers erhöht.

Weiterhin besonders bevorzugt ist das Hohlprofil in seiner Längsrichtung zumindest längenabschnittsweise trapezförmig aufeinander zu laufend ausgebildet. Insbesondere zu einem Ende hin verjüngt sich das Hohlprofil, somit wird der Abstand der Schenkel zueinander verringert.

Die Anbindungspunkte sind als Lageraugen zur Aufnahme von Gummimetalllagern ausgebildet.

Weiterhin bevorzugt bildet eine Verbindungsgerade durch die Anbindungspunkte, insbesondere durch den Mittelpunkt der Anbindungspunkte eine Wirklinie. Das Hohlprofil weist bezogen auf die Wirklinie einen bogenförmigen Verlauf auf. Insbesondere ist der bogenförmige Verlauf in Einbaulage in Richtung unterhalb der Wirklinie orientiert. Ferner wird der bogenförmige Verlauf bevorzugt derart ausgebildet, dass das Federsitzblech mit einer Federauflagenfläche unterhalb der Wirklinie liegt. Auch hierdurch kann der Kraftfluss innerhalb des Federlenkers optimiert werden, so dass insbesondere die einwirkenden Kräfte beim Einfederungsvorgang besser in die Anbindungspunkte geleitet werden und der vorbeschriebene Atmungseffekt verringert wird.

Zur Herstellung des Federlenkers wird insbesondere eine Stahlblechplatine umgeformt und/oder abgekantet oder in anderer Weise formgebend bearbeitet. Verschiedene Maßnahmen zum Korrosionsschutz sind ebenfalls Bestandteil der Erfindung. Beispielsweise kann eine vorbeschichtete Platine bearbeitet werden. Der hergestellte Federlenker kann jedoch auch im KTL-Verfahren beschichtet werden.

Insbesondere werden Blechstärken von 1,8 mm bis 4,75 mm verarbeitet, wobei eine Wandstärke des Federsitzbleches größer gleich, insbesondere größer der Wandstärke des Hohlprofils selber ist. Somit kann beispielsweise das Hohlprofil aus einer Wandstärke von 1,8 mm Blech ausgebildet sein und das Federsitzblech aus einer Wandstärke von 2,3 mm.

Das Federsitzblech selber muss aus einem dickeren und somit gegen Biegung widerstandsfähigeren Blech ausgebildet sein. Das Hohlprofil selber kann aufgrund seiner geometrischen Form bereits eine hohes Widerstandsmoment gegen Durchbiegung in Einbaulage, gerade bezogen auf die Vertikalrichtung besitzen. Insgesamt kann somit ein Federlenker bereitgestellt werden, der ein geringes Bauteilgewicht bei gleichzeitig hohem Widerstandsmoment gegen Biegung aufweist.

Weiterhin ist in und/oder auf der Öffnung des Hohlprofils zumindest längenabschnittsweise in Längsrichtung des Federlenkers ein Verstärkungsblech gekoppelt. Bevorzugt sind mehrere Verstärkungsbleche in dem Federlenker angeordnet. Somit kann je nach Steifigkeitsanforderung der Federlenker optimiert werden.

Weiterhin besonders bevorzugt weist das Federsitzblech eine auf die Einbaulage bezogen gegenüber einer Federauflagenfläche nach oben orientierte Wulst auf, so dass die Wulst innenseitig in die Schraubendruckfeder und hier insbesondere in die Windung eingreift. Ein horizontales Abrutschen der Schraubendruckfeder wird durch die Wulst vermieden. Insbesondere liegt weiterhin die Windung teilweise auf die Vertikalrichtung bezogen einer vertikalen Kraftlinie direkt über den Schenkeln. Die insbesondere beim Einfederungsvorgang entstehenden Federkräfte können somit direkt in einen optimierten Kraftfluss innerhalb des Federlenkers abgeleitet werden.

Weitere Vorteile, Merkmale, Eigenschaften und Aspekte der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1: den erfindungsgemäßen Federlenker in perspektivischer Ansicht,
- Figur 2: eine schematische Querschnittsansicht mit Schraubendruckfeder im Bereich des Federsitzbleches,
- Figur 3: eine Seitenansicht des Federlenkers,
- Figur 4: eine Schnittlinie A-A aus Figur 3,
- Figur 5: eine Draufsicht auf den erfindungsgemäßen Federlenker und
- Figur 6: eine schematische Ansicht eines nach unten gebogenen Federlenkers.

In den Figuren werden für gleiche oder ähnliche Bauteile dieselben Bezugszeichen verwendet, auch wenn eine wiederholte Beschreibung aus Vereinfachungsgründen entfällt.

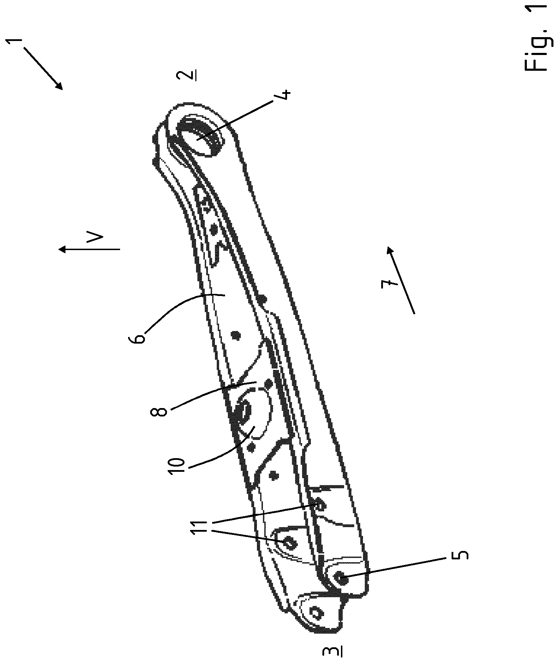

Figur 1 zeigt den erfindungsgemäßen Federlenker 1 in perspektivischer Ansicht. Dieser ist als längliches Blechumformbauteil ausgebildet und weist an seinen jeweiligen Enden 2, 3 Anbindungspunkte 4, 5 auf, so dass er an einem Ende 3 an einer nicht näher dargestellten Karosserie drehbar befestigt werden kann und am gegenüberliegendem Ende 2 an einem nicht näher dargestellten Radträger oder andersartigem Achsbauteil. Auch kann der Federlenker 1 an einem Achshilfsrahmen befestigt werden. Hierzu werden Gummimetalllager verwendet. Diese sind jedoch aus Vereinfachungsgründen nicht näher dargestellt.

Erfindungsgemäß ist der Federlenker 1 im Querschnitt als offenes Hohlprofil ausgebildet und weist eine Öffnung 6 auf, wobei die Öffnung 6 auf die Vertikalrichtung V bezogen in Einbaulage nach oben zeigt. In Längsrichtung 7 des Federlenkers 1 ist auf der Öffnung 6 ein Federsitzblech 8 abschnittsweise angeordnet. Das Federsitzblech 8 weist eine Federauflagefläche 9 auf sowie eine sich auf die Vertikalrichtung V bezogen nach oben erstreckende Wulst 10. Ferner ist eine Aufnahme 11 zur Koppelung eines nicht näher dargestellten Dämpfers vorgesehen.

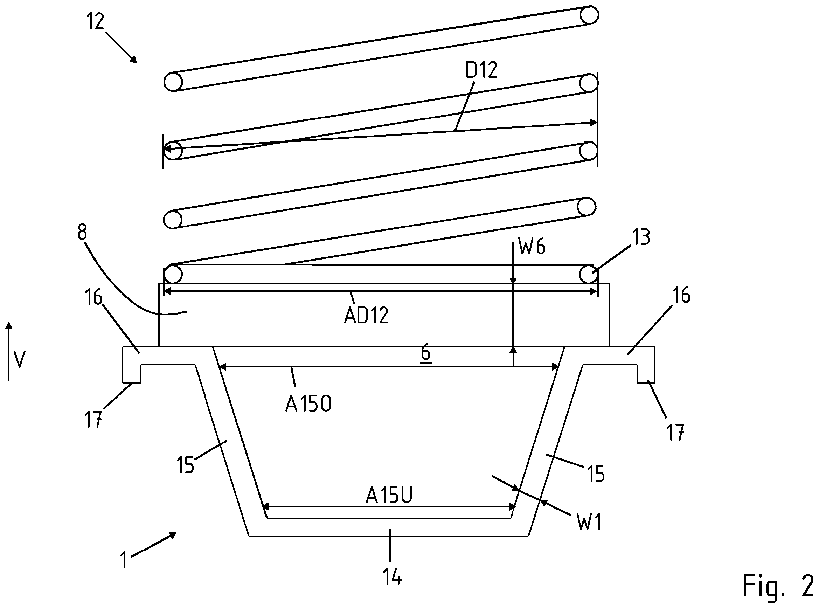

Gemäß Figur 2, welche eine Querschnittsansicht im Bereich des Federsitzbleches 8 mit Schraubendruckfeder 12 darstellt, ist gut zu erkennen, dass der Federlenker 1 im Querschnitt als Hohlprofil ausgebildet ist. Die Wulst 10 ist nicht dargestellt. Eine auf die Vertikalrichtung V bezogen obenliegende Öffnung 6 ist von dem Federsitzblech 8 abgeschlossen. Das Hohlprofil weist einen Steg 14 sowie sich seitlich von dem Steg 14 in Vertikalrichtung V orientiert erstreckende Schenkel 15 auf. Am Ende der Schenkel 15 sind seitlich abstehende Flansche 16 angeordnet und wiederum am Ende der Flansche 16 ist jeweils ein auf die Vertikalrichtung bezogen nach unten abgebogener Kragen 17 ausgebildet.

Die Wandstärke W6 des Federsitzbleches 8 ist größer als die Wandstärke W1 des Hohlprofils. Die Schraubendruckfeder 12 selber ist mit ihrer abschließenden Windung 13 derart angeordnet, dass diese auf die Vertikalrichtung V bezogen oberhalb der Schenkel 15 angeordnet ist. Eine durch die Schraubendruckfeder 12 in den Federlenker 1 eingeleitete Kraft wird somit über das Federsitzblech 8 direkt in die Schenkel 15 eingeleitet.

Der größte Abstand A15O der Schenkel 15 entspricht dabei bevorzugt dem 0,5- bis 1,2-fachen, insbesondere 0,8- bis 1,1-fachen Durchmesser D12 der Schraubendruckfeder 12 oder eines Aufnahmedurchmessers AD12. Die Erfindung betrifft somit auch eine Anordnung an einer Kraftfahrzeugachse mit einer Schraubendruckfeder 12 und einem Federlenker 1. Es ist bevorzugt ein Aufnahmedurchmesser AD12 an dem Federsitzblech 8 ausgebildet. Dieser Aufnahmedurchmesser AD12 ist dazu geeignet insbesondere die letzte Windung 13 der Schraubendruckfeder 12 entsprechend aufzunehmen.

Ferner ist zu erkennen, dass die Schenkel V-förmig zueinander angeordnet sind, so dass sich auf die Vertikalrichtung bezogen ein unterer Abstand A15U ergibt und sich in Richtung zur Öffnung 6 hin vergrößert zum oberen Abstand A15O.

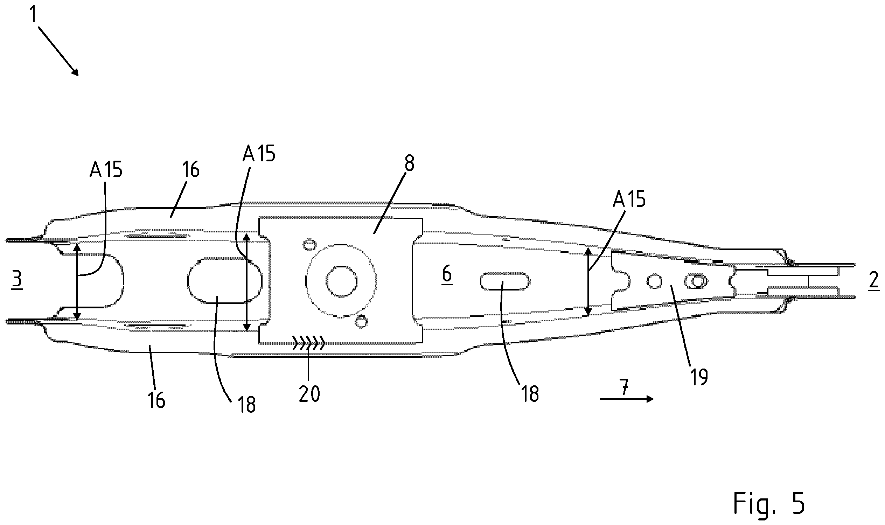

Gut zu erkennen ist in der Draufsicht gemäß Figur 5, dass der Abstand A15 der Schenkel 15 im Bereich des Federsitzbleches 8 im Wesentlichen dem Abstand A15 der Schenkel 15 im Bereich des Endes 3 entspricht. Der Abstand A15 ist im Bereich des Federsitzbleches 8 maximal 1,2-fach größer als der Abstand A15 der Schenkel 15 im Bereich des Endes 3. Zu dem anderen Ende 2 hin verringert sich der Abstand A15 der Schenkel 15 zueinander, so dass der Federlenker 1 in seiner Längsrichtung 7 abschnittsweise trapezförmig ausgebildet ist bzw. die Schenkel 15 aufeinander zu laufend orientiert sind. Ferner sind Aussparungen 18 vorgesehen zur Gewichtsreduzierung und/oder damit Spritzwasser sich nicht im Inneren des Hohlprofils staut, so dass hierdurch Korrosion aufgrund stehenden Wassers begünstigt würde.

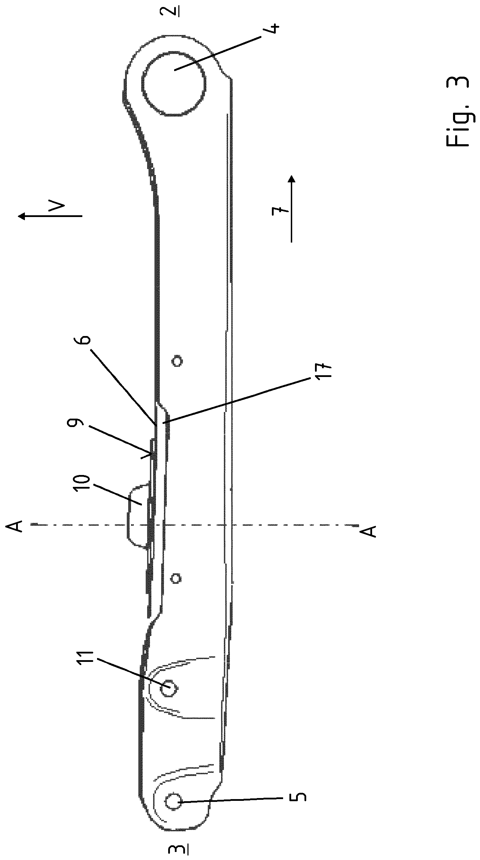

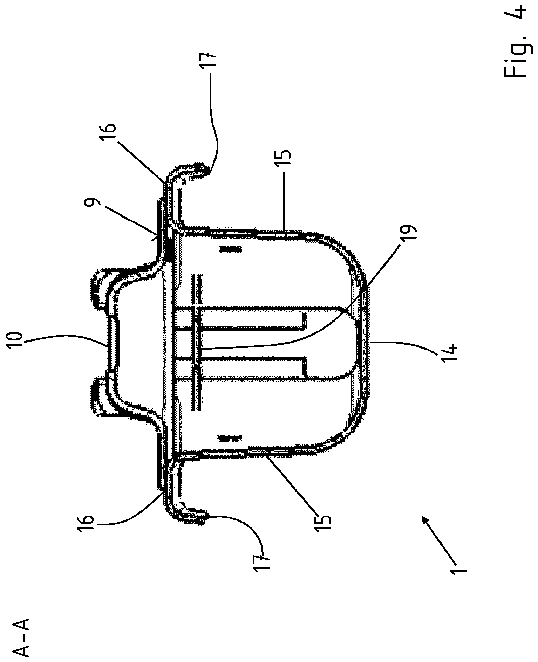

Ferner ist ein Verstärkungsblech 19 mit zusätzlicher Versteifung vorgesehen. Dies ist auch nochmals gut zu erkennen in der Querschnittsansicht gemäß Figur 4. Gemäß der Seitenansicht von Figur 3 ist nochmal zu erkennen, dass der auf die Vertikalrichtung bezogen nach unten abgebogene Kragen 17 nur im Bereich des Federsitzbleches 8 zur zusätzlichen Aussteifung gebildet ist. Ferner ist der Flansch 16 gemäß Draufsicht von Figur 5 im Bereich des Federsitzbleches 8 verbreitert, so dass eine beispielsweise angedeutete thermische Fügenaht 20 hergestellt werden kann. Nochmals ist der Federlenker in einer Schnittansicht gemäß der Schnittlinie A-A von Figur 3 in Figur 4 dargestellt.

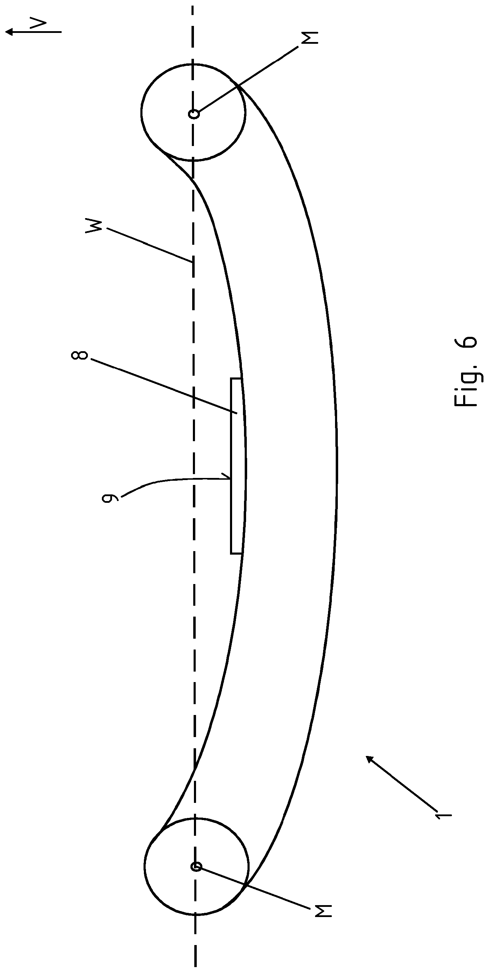

Figur 6 zeigt einen erfindungsgemäßen Federlenker 1 in alternativer Ausgestaltungsvariante. Hierbei ist durch die Anbindungspunkte 4, 5 eine Wirklinie W dargestellt. Diese verläuft durch die jeweiligen Mittelpunkte M der Anbindungspunkte 4, 5. Nunmehr weist der Federlenker 1 auf die Vertikalrichtung V einen nach unten orientierten bogenförmigen Verlauf auf. Hierdurch wird erreicht, dass die Federauflagenfläche 9 unterhalb der Wirklinie W liegt.

### Bezugszeichen:

- 1 -: Federlenker
- 2 -: Ende zu 1
- 3 -: Ende zu 1
- 4 -: Anbindungspunkt zu 2
- 5 -: Anbindungspunkt zu 3
- 6 -: Öffnung
- 7 -: Längsrichtung zu 1
- 8 -: Federsitzblech
- 9 -: Federauflagefläche zu 8
- 10 -: Wulst
- 11 -: Aufnahme
- 12 -: Schraubendruckfeder
- 13 -: Windung zu 12
- 14 -: Steg
- 15 -: Schenkel
- 16 -: Flansch
- 17 -: Kragen
- 18 -: Aussparung
- 19 -: Verstärkungsblech
- 20 -: thermische Fügenaht

- A15 -: Abstand zu 15
- A15O -: Abstand oben
- A15U -: Abstand unten
- AD12 -: Aufnahmedurchmesser
- D12 -: Durchmesser
- M -: Mittelpunkt
- V -: Vertikalrichtung
- W -: Wirklinie

## Patentansprüche

1. Achsanordnung für ein Kraftfahrzeug, aufweisend einen Federlenker (1) und ein Federsitzblech (8), wobei der Federlenker (1) als längliches umgeformtes im Querschnitt offenes U-förmig oder C-förmig oder hutförmig ausgebildet Hohlprofil mit zwei gegenüberliegenden Schenkeln (15) aus einem Stahlwerkstoff hergestellt ist und an seinen Enden (2, 3) jeweils Anbindungspunkte (4, 5) aufweist, wobei der Federlenker (1) in Einbaulage mit seiner Öffnung (6) des Hohlprofils nach oben zeigend angeordnet ist, wobei auf und/oder teilweise in der Öffnung (6) das Federsitzblech (8) zur Aufnahme einer Schraubendruckfeder (12) mit dem Federlenker (1) gekoppelt ist, wobei in und/oder auf der Öffnung (6) des Hohlprofils zumindest längenabschnittsweise in Längsrichtung des Federlenkers (1) ein Verstärkungsblech (19) gekoppelt ist, wobei ein Abstand (A15) der Schenkel (15) zueinander im Bereich des Federsitzbleches (8) gleich oder kleiner ist gegenüber einem 1,2-fachen Abstand (A15) der Schenkel (15) zueinander im Bereich eines Endes (2, 3) oder eines Anbindungspunktes (4, 5), **dadurch gekennzeichnet, dass** die Anbindungspunkte (4, 5) als Lageraugen ausgebildet sind und in den Lageraugen Gummimetalllager angeordnet sind.

2. Achsanordnung nach Anspruch 1, **dadurch gekennzeichnet, dass** der Abstand (A15) der Schenkel (15) im Bereich des Federsitzbleches (8) kleiner gleich dem Abstand (A15) der Schenkel (15) im Bereich des Endes (2, 3) oder des Anbindungspunktes (4, 5) ist.

3. Achsanordnung nach Anspruch 2, **dadurch gekennzeichnet, dass** ein Abstand (A15) der Schenkel (15) zueinander im Bereich des Federsitzbleches (8) einem 0,5-fachen bis 1,2-fachen, bevorzugt 0,8-fachen bis 1,1-fachen Aufnahmedurchmesser (AD12) auf dem Federsitzblech (8) entspricht, wobei der Aufnahmedurchmesser (AD12) geeignet ist, eine Schraubendruckfeder (12) aufzunehmen.

4. Achsanordnung nach einem der Ansprüche 1 bis 3, **dadurch gekennzeichnet, dass** sich der Abstand (A15) der Schenkel (15) in Richtung zu der Öffnung (6) hin vergrößert, insbesondere sind die Schenkel (15) in einem Winkel zu einander verlaufend orientiert angeordnet.

5. Achsanordnung nach einem der Ansprüche 1 bis 4, **dadurch gekennzeichnet, dass** das Hohlprofil im Bereich des Federsitzbleches (8) seitlich abstehende Flansche (16) und/oder Kragen (17) aufweist.

6. Achsanordnung nach einem der Ansprüche 1 bis 5, **dadurch gekennzeichnet, dass** das Hohlprofil in seiner Längsrichtung (7) zumindest längenabschnittsweise trapezförmig aufeinander zulaufend ausgebildet ist, insbesondere zu einem Ende (2) hin.

7. Achsanordnung nach einem der Ansprüche 1 bis 6, **dadurch gekennzeichnet, dass** eine Verbindungsgerade durch die Anbindungspunkte (4, 5) eine Wirklinie (W) bildet, wobei das Hohlprofil bezogen auf die Wirklinie (W) einen bogenförmigen Verlauf aufweist.

8. Achsanordnung nach Anspruch 7, **dadurch gekennzeichnet, dass** der bogenförmige Verlauf unterhalb der Wirklinie orientiert ist und/oder dass das Federsitzblech (8) eine Federauflagefläche (9) aufweist, die unterhalb der Wirklinie liegt.

9. Achsanordnung nach einem der Ansprüche 1 bis 8, **dadurch gekennzeichnet, dass** eine Wandstärke des Hohlprofils von 1,8 mm bis 4,75 mm ausgebildet ist und eine Wandstärke (W8) des Federsitzbleches (8) größer gleich der Wandstärke (W1) des Hohlprofils ausgebildet ist.

10. Achsanordnung nach einem der Ansprüche 1 bis 9, **dadurch gekennzeichnet, dass** das Federsitzblech (8) eine auf die Einbaulage bezogen gegenüber einer Federauflagefläche (9) nach oben orientierte Wulst (10) aufweist, so dass die Wulst (10) innenseitig in die Schraubendruckfeder (12) eingreift.

## Claims

1. Axle arrangement for a motor vehicle, having a spring link (1) and a spring seat plate (8), wherein the spring link (1) is formed as an elongated, shaped hollow profile with an open cross-section in a U-shape or C-shape or hat shape with two opposing legs (15) from a steel material, and has attachment points (4, 5) at each of its ends (2, 3), wherein the spring link (1) is arranged in the installed position with its opening (6) of the hollow profile pointing upwards, wherein the spring seat plate (8) for receiving a helical compression spring (12) is coupled to the spring link (1) on and/or partially in the opening (6), wherein a reinforcing plate (19) is coupled in and/or on the opening (6) of the hollow profile at least in some lengthwise sections in the longitudinal direction of the spring link (1), wherein a distance (A15) of the legs (15) from one another in the region of the spring seat plate (8) is equal to or smaller than a 1.2 times distance (A15) of the legs (15) from one another in the region of an end (2, 3) or an attachment point (4, 5), **characterised in that** the attachment points (4, 5) are configured as bearing eyes and rubber-metal bearings are arranged in the bearing eyes.

2. Axle arrangement according to claim 1, **characterised in that** the distance (A15) of the legs (15) in the region of the spring seat plate (8) is less than or equal to the distance (A15) of the legs (15) in the region of the end (2, 3) or the attachment point (4, 5).

3. Axle arrangement according to claim 2, **characterised in that** a distance (A15) of the legs (15) from one another in the region of the spring seat plate (8) corresponds to 0.5 times to 1.2 times, preferably 0.8 times to 1.1 times, the receiving diameter (AD12) on the spring seat plate (8), wherein the receiving diameter (AD12) is suitable for receiving a helical compression spring (12).

4. Axle arrangement according to any one of claims 1 to 3, **characterised in that** the distance (A15) of the legs (15) increases in the direction of the opening (6), in particular the legs (15) are oriented at an angle to one another.

5. Axle arrangement according to any one of claims 1 to 4, **characterised in that** the hollow profile in the region of the spring seat plate (8) has laterally projecting flanges (16) and/or collars (17).

6. Axle arrangement according to any one of claims 1 to 5, **characterised in that** the hollow profile is configured in its longitudinal direction (7) to taper in trapezoidal form at least in some length sections, in particular towards one end (2).

7. Axle arrangement according to any one of claims 1 to 6, **characterised in that** a connecting line through the attachment points (4, 5) forms a line of action (W), wherein the hollow profile has an arcuate course with respect to the line of action (W).

8. Axle arrangement according to claim 7, **characterised in that** the arcuate course is oriented below the line of action and/or that the spring seat plate (8) has a spring support surface (9) which lies below the line of action.

9. Axle arrangement according to any one of claims 1 to 8, **characterised in that** a wall thickness of the hollow profile is configured to be from 1.8 mm to 4.75 mm and a wall thickness (W8) of the spring seat plate (8) is configured to be greater than or equal to the wall thickness (W1) of the hollow profile.

10. Axle arrangement according to any one of claims 1 to 9, **characterised in that** the spring seat plate (8) has a bead (10) oriented upwards relative to a spring support surface (9) in relation to the installation position, such that the bead (10) engages on the inside in the helical compression spring (12).

## Revendications

1. Ensemble formant essieu pour un véhicule automobile, présentant un bras de suspension (1) et une tôle (8) formant siège de ressort, le bras de suspension (1) se présentant sous la forme d'un profilé creux façonné, oblong, réalisé en forme de U ouvert ou en forme de C ou en forme de chapeau en section transversale avec deux branches opposées (15) en un matériau d'acier et présente à chacune de ses extrémités (2, 3) des points de liaison (4, 5), le bras de suspension (1) étant, en position de montage, agencé avec son ouverture (6) du profilé creux orientée vers le haut, la tôle (8) formant siège de ressort étant couplée au bras de suspension (1) sur et/ou partiellement dans l'ouverture (6), pour recevoir un ressort de compression hélicoïdal (12), une tôle de renfort (19) étant, dans et/ou sur l'ouverture (6) du profilé creux, couplée au moins par tronçons longitudinaux dans la direction longitudinale du bras de suspension (1), une distance (A15) des branches (15) les unes par rapport aux autres dans la zone de la tôle (8) formant siège de ressort étant inférieure ou égale à 1,2 fois une distance (A15) des branches (15) les unes par rapport aux autres dans la zone d'une extrémité (2, 3) ou d'un point de liaison (4, 5), **caractérisé en ce que** les points de liaison (4, 5) sont réalisés sous la forme d'oeillets de palier et des paliers en métal-caoutchouc sont agencés dans les œillets.

2. Ensemble formant essieu selon la revendication 1, **caractérisé en ce que** la distance (A15) des branches (15) dans la zone de la tôle (8) formant siège de ressort est inférieure ou égale à la distance (A15) des branches (15) dans la zone de l'extrémité (2, 3) ou du point de liaison (4, 5).

3. Ensemble formant essieu selon la revendication 2, **caractérisé en ce qu'**une distance (A15) des branches (15) les unes par rapport aux autres dans la zone de la tôle (8) formant siège de ressort correspond à 0,5 à 1,2 fois, de préférence à 0,8 à 1,1 fois un diamètre de réception (AD12) sur la tôle (8) formant siège de ressort, dans lequel le diamètre de réception (AD12) est adapté pour recevoir un ressort de compression hélicoïdal (12).

4. Ensemble formant essieu selon l'une des revendications 1 à 3, **caractérisé en ce que** la distance (A15) des branches (15) augmente en direction de l'ouverture (6), en particulier les branches (15) sont disposées en étant orientées selon un angle l'une par rapport à l'autre.

5. Ensemble formant essieu selon l'une des revendications 1 à 4, **caractérisé en ce que** le profilé creux présente des brides (16) et/ou des collets (17) dépassant latéralement dans la zone de la tôle (8) formant siège de ressort.

6. Ensemble formant essieu selon l'une des revendications 1 à 5, **caractérisé en ce que** le profilé creux dans son sens longitudinal (7) est formé convergeant l'un vers l'autre au moins par section longitudinale en forme de trapèze, en particulier vers une extrémité (2).

7. Ensemble formant essieu selon l'une des revendications 1 à 6, **caractérisé en ce qu'**une droite de liaison passant par les points de liaison (4, 5) forme une ligne active (W), dans laquelle le profilé creux présente un tracé en arc par rapport à la ligne active (W).

8. Ensemble formant essieu selon la revendication 7, **caractérisé en ce que** le tracé en arc est orienté en dessous de la ligne active et/ou **en ce que** la tôle (8) formant siège de ressort présente une surface d'appui de ressort (9) qui se trouve en dessous de la ligne active.

9. Ensemble formant essieu selon l'une des revendications 1 à 8, **caractérisé en ce qu'**une épaisseur de paroi du profilé creux est formée entre 1,8 mm et 4,75 mm et une épaisseur de paroi (W8) de la tôle (8) formant siège de ressort est formée de manière à être supérieure ou égale à l'épaisseur de paroi (W1) du profilé creux.

10. Ensemble formant essieu selon l'une des revendications 1 à 9, **caractérisé en ce que** la tôle (8) formant siège de ressort présente un bourrelet (10) orienté vers le haut en ce qui concerne la position de montage par rapport à une surface d'appui de ressort (9) de sorte que le bourrelet (10) s'engage côté intérieur dans le ressort de compression hélicoïdal (12).
